# FASCICULE DE BREVET EUROPEEN

(11) **EP 3 308 235 B1**
(45) Date de publication et mention de la délivrance du brevet: **07.04.2021**
(21) Numéro de dépôt: 15742336.9
(22) Date de dépôt: 10.06.2015
(51) Int. Cl.: G05D 16/10

(54) **DETENDEUR DE FLUIDE COMPACT ET COMPENSE EN PRESSION**
KOMPAKTER UND DRUCK-AUSGEGLICHENER REGLER ZUR FLUIDFÖRDERUNG
COMPACT AND PRESSURE-BALANCED FLUID REGULATOR

(43) Date de publication de la demande: 18.04.2018
(73) Titulaire: AD Venta, 26270 Loriol-Sur-Drôme (FR)
(72) Inventeur: MUSSOT, Jean-Luc, 26270 Loriol Sur Drome (FR)
(74) Mandataire: Novagraaf Technologies
(86) Numéro de dépôt international: PCT/FR2015/000117
(87) Numéro de publication internationale: WO 2016/198752

(56) Documents cités:
- GB-A- 536 796
- US-A- 4 368 872

## Description

La présente invention a pour objet un détendeur compensé et compact pour la distribution de fluide sous pression ainsi qu'une tête de réservoir intégrant le dit détendeur.

Le secteur technique de l'invention est le domaine de la fabrication et de l'utilisation de dispositifs de détente de fluide sous pression, tels que les gaz, dans lesquels on veut que la délivrance du fluide sous pression détendu à une pression déterminée soit indépendante de la pression du fluide sous pression à l'entrée.

Afin de réaliser la détente d'un fluide sous pression, depuis un premier niveau de pression dite haute jusqu'à un deuxième niveau de pression dite basse, inférieure à la pression haute, il est en effet connu d'utiliser des dispositifs de détente, plus simplement appelés détendeurs.

Le principe de fonctionnement d'un détendeur est parfaitement connu : il repose sur l'égalité de deux forces exercées directement ou indirectement, de part et d'autre d'une pièce mobile de régulation telle qu'une membrane ou un piston, par d'une part le fluide à la pression haute et à la pression basse, et d'autre part un élément à effet ressort dit de détente ou de compensation; ainsi dans le cas le plus courant où la force de référence de l'élément ressort s'exerce du côté opposé à celle transmise à la fois par le fluide à la pression basse et à la pression haute, ce fluide remplit deux chambres sous deux pressions différentes, séparées par une cloison dotée d'un conduit dans lequel coulisse une tige solidaire de la pièce mobile de régulation et comportant un clapet apte à fermer ce conduit dans le sens de la chambre à pression haute vers la chambre à pression basse. Quand la force transmise à la fois par le fluide à la pression basse et à la pression haute est plus faible que celle antagoniste transmise par le ressort, celle-ci pousse la pièce mobile de régulation dont le clapet situé sur sa tige ouvre alors l'arrivée du fluide sous pression haute : celui-ci va alimenter ainsi la chambre à la pression basse jusqu'à ce que celle-ci, en augmentant, permette d'exercer une force sur la pièce mobile de régulation égale puis supérieure à celle antagoniste de l'élément ressort; cette force supérieure va pousser la pièce mobile de régulation jusqu'à fermer l'arrivée du fluide sous pression haute, et ainsi de suite; l'équilibre des dites forces assure ainsi la délivrance d'un fluide à une pression basse voulue quasi constante pour une valeur de poussée de l'élément ressort déterminée, qui peut être réglable.

Cependant dans la plupart des détendeurs connus si la pression haute du fluide à détendre subit de grandes variations, la force correspondante sur la pièce mobile de régulation va changer et l'ouverture du clapet ne se fera plus au même moment, entraînant une variation de la pression basse du fluide détendu à travers le dit clapet et donc un mauvais fonctionnement et rendement, et des perturbations dans l'appareil utilisateur, qui se situe en aval du détendeur dont il reçoit directement le fluide à la pression basse.

Chaque détendeur a ainsi une «courbe de détente dynamique» qui est représentatif de cette propriété qui peut donc être très gênante. Pour pallier à cet inconvénient, il a été développé plusieurs catégories de détendeurs connus qui ont pour objectif, plus ou moins bien atteint, à délivrer une pression de sortie indépendamment de la pression d'entrée quand celle-ci peut varier, tels que:
- ceux à deux étages,
- ceux, de type classique, disposant en plus d'un clapet dit « compensé » qui annule l'influence de la pression haute au détriment cependant de la simplicité et de la compacité du détendeur, et
- ceux, dit de type inversé, étant conçus de telle façon que la pression haute, s'appuyant circulairement et sur une surface perpendiculaire au sens du déplacement, génère sur la pièce mobile de régulation une force quasi nulle par rapport à celles exercées à la fois par l'élément ressort qui appuie dans le sens de l'ouverture du clapet et celle opposée exercée par le fluide à la pression basse sur la surface de la pièce mobile et qui tend à fermer le clapet, comme décrit dans les demandes de brevet EP362166, FR2879721 et FR2050407.

Dans toutes les catégories de détendeurs connus ci-dessus qui tendent donc à délivrer une pression de sortie indépendamment de la pression d'entrée quand celle-ci peut varier, les solutions développées sont cependant assez complexes, n'atteignent pas toujours le résultat escompté et ne permettent pas de réaliser un détendeur compact et simple à réaliser : aussi la présente invention a pour objectif de pallier à ces inconvénients majeurs tant sur le plan de la facilité de fabrication que du montage, et donc du cout, que sur le plan de la compacité du produit et de sa fiabilité.

Les objectifs de la présente invention se rapportent ainsi à un détendeur compensé, mais d'une manière nouvelle et innovante, compact et simple de fabrication, apte à être monté sur tout type de conduit d'amenée de fluide sous pression reliant le plus directement une source de fluide à pression haute à un appareil utilisateur fonctionnant à une pression basse, ou directement entre la source et l'appareil utilisateur, ou même directement sur un réservoir dont il constitue alors la tête de distribution, et qui permet de distribuer, d'une manière fiable, une basse pression de sortie constante indépendamment de la pression d'entrée quand celle-ci peut varier, et de plus cette basse pression de distribution pouvant être réglable facilement.

Ces objectifs sont atteints par un détendeur compensé de fluide sous pression comportant d'une manière connue un corps creux, au moins une arrivée d'un fluide à pression dite haute, au moins une sortie de ce fluide à pression dite basse depuis une chambre de détente aval, une pièce mobile de régulation qui coulisse dans un alésage cylindrique du dit corps creux et qui forme un piston, sur lequel appuient d'un côté la pression basse et de l'autre côté un élément ressort dit de détente, et qui est apte à arrêter l'arrivée du fluide sous pression haute ; selon l'invention:
- le détendeur comporte une pièce de forme générale cylindrique, de préférence de révolution, à deux têtes, séparées et reliées par une partie cylindrique de plus petite section formant tige, et dont les deux faces partielles intérieures et opposées sont de surface quasi égale, ces deux dites faces partielles intérieures, une partie d'un alésage entourant la dite pièce d'une manière étanche et un joint d'étanchéité solidaire de cet alésage délimitant une chambre haute pression, ladite pièce à deux têtes et cet alésage étant mobiles l'un par rapport à l'autre,
- l'arrivée du fluide haute pression débouche latéralement dans la chambre haute pression, lequel fluide transmettant alors à la pièce mobile de régulation des efforts qui s'annulent, le déplacement de la dite pièce mobile de régulation n'est pas modifié par des variations de la haute pression,

- la pièce mobile de régulation vient arrêter l'arrivée du fluide haute pression et isoler d'une manière étanche la chambre haute pression de la chambre de détente aval par appui sur le joint étanche de la tête située du côté de la pression basse de la chambre de détente aval lorsque la pression dans celle-ci transmet une force supérieure à la force antagoniste fournie par l'élément ressort sur la pièce mobile de régulation,
- et réciproquement celle-ci ouvre l'arrivée du fluide haute pression de la chambre haute pression vers la chambre de détente lorsque la basse pression dans celle-ci transmet une force inférieure à la force antagoniste fournie par l'élément ressort sur la pièce mobile de régulation.

Suivant un premier mode de réalisation, la pièce de forme générale cylindrique à deux têtes est la dite pièce mobile de régulation sur les faces extérieures desquelles appuient respectivement sur l'une l'élément ressort de détente et sur l'autre le fluide à pression basse, et cette pièce coulisse dans l'alésage solidaire du corps creux

Suivant un deuxième mode de réalisation, la pièce de forme générale cylindrique à deux têtes est fixe par rapport au corps creux et la pièce mobile de régulation est une deuxième pièce indépendante portant l'alésage et le joint : cette pièce mobile de régulation coulisse autour de la pièce de forme générale cylindrique à deux têtes et coulisse également elle-même dans un autre alésage du corps creux.

Les objectifs sont également atteints par une tête de réservoir, dans lequel est stocké un fluide sous haute pression, comportant un détendeur tel que ci-dessus, qui est intégré dans la dite tête dont le corps, correspondant alors à celui du détendeur, est apte à être fixé sur le col du dit réservoir, l'orifice d'arrivée de ce fluide à pression haute dans le détendeur étant alors située à l'intérieur du réservoir et celui de sortie à l'extérieur de celui-ci.

Le résultat est un nouveau détendeur compensé de fluide sous pression ainsi qu'une nouvelle tête de réservoir qui répondent aux objectifs ci-dessus : en effet la pièce mobile de régulation n'est pas soumis aux effets de la haute pression, car suivant l'invention celle-ci ne s'exerce d'une part que perpendiculairement au déplacement de cette pièce mobile et/ou d'autre part sur des surfaces opposées et égales, dont les forces qui leur sont transmises par le fluide sous haute pression s'annulent donc ; un tel détendeur est parfaitement compensé et distribue en sortie, d'une manière fiable, un fluide basse pression constante indépendamment de la valeur de la haute pression d'entrée même quand celle-ci varie, et de plus cette basse pression de distribution peut être réglable facilement comme explicité ci-après.

Par ailleurs la disposition des pièces qui le composent, et dont les principales sont toutes coaxiales et emboîtables et/ou vissables les unes dans les autres, permet une réalisation et un montage simples et le détendeur obtenu peut être très compact comme les exemples décrits ci-après le montrent.

On pourrait citer d'autres avantages de la présente invention mais ceux cités ci-dessus en montrent déjà suffisamment pour en prouver la nouveauté et l'intérêt.

La description ci-après et les dessins joints représentent quatre exemples de réalisation de l'invention, mais n'ont aucun caractère limitatif : d'autres réalisations sont possibles dans le cadre de la portée et de l'étendue de cette invention.

En effet bien que l'invention soit décrite en liaison avec des exemples particuliers de réalisation, il est évident qu'elle n'y est nullement limitée mais au contraire susceptible de modifications et de variantes qui apparaîtront à l'homme de l'art et qu'elle comprend tous les éléments techniques des moyens décrits ainsi que leurs combinaisons si celles-ci entrent dans le cadre de l'invention.

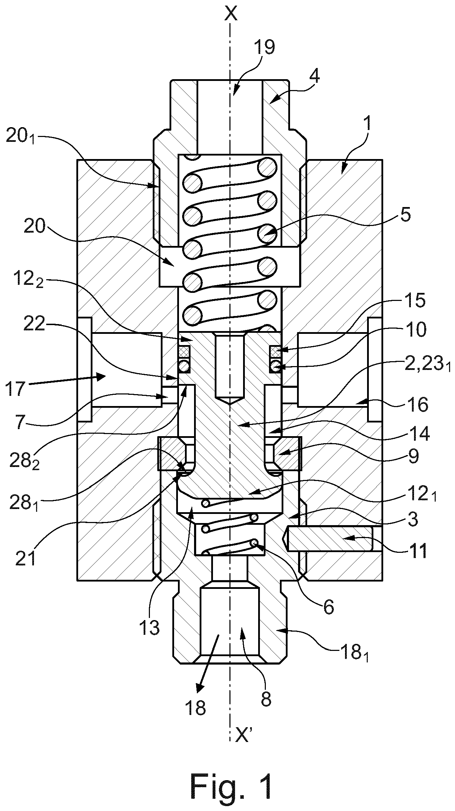

La figure 1 est une vue en coupe axiale d'un détendeur suivant un premier mode de réalisation suivant l'invention avec un réglage de la pression basse par un élément ressort de détente appuyant sur une tête de la pièce de forme générale cylindrique à deux têtes, qui est aussi la pièce mobile de régulation, la surface de contact de la dite tête avec le ressort de détente étant de surface égale à celle correspondant à la chambre de détente aval.

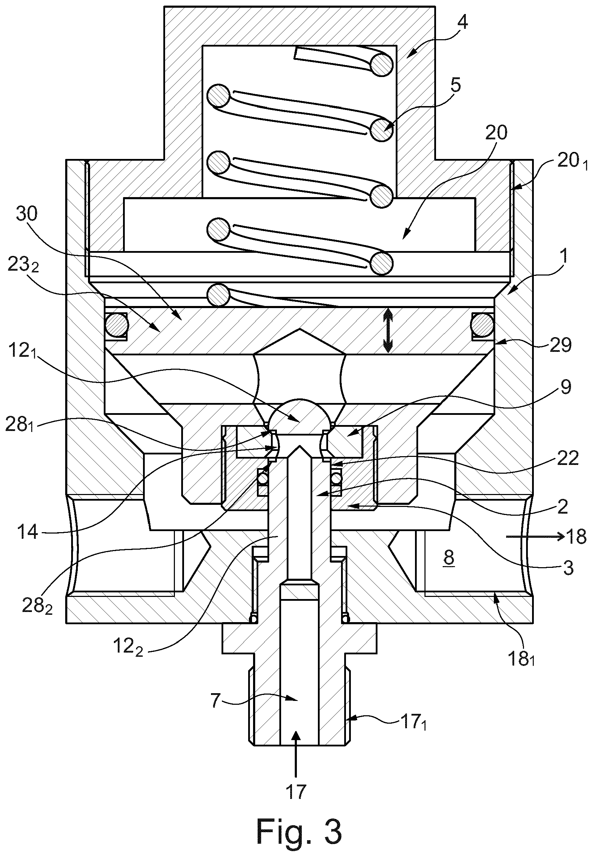

La figure 3 est une vue en coupe axiale, comme sur la figure 1, d'un détendeur suivant un deuxième mode de réalisation suivant l'invention avec un réglage de la pression basse par un ressort de détente appuyant sur une tête de la pièce mobile de régulation qui coulisse par rapport à la pièce de forme générale cylindrique à deux têtes, qui est fixe.

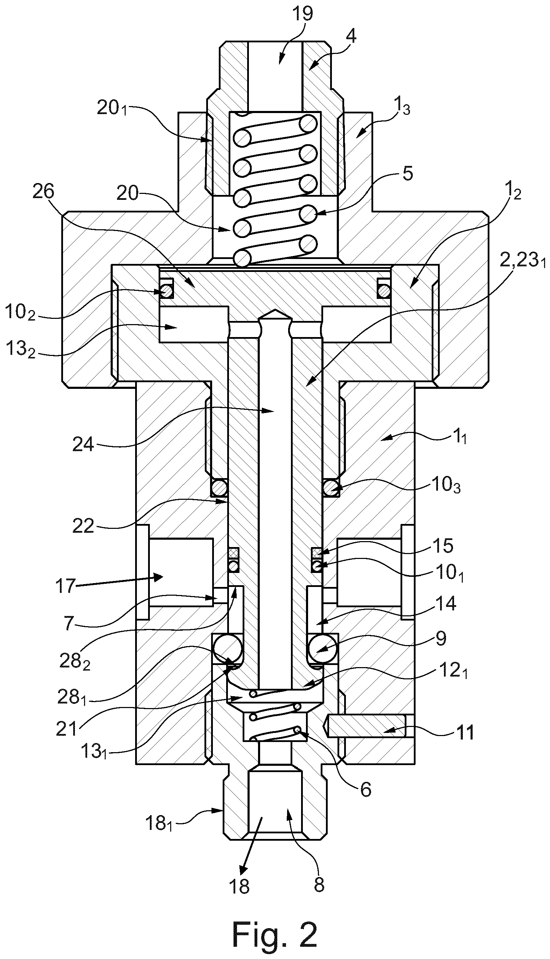

La figure 2 est une vue en coupe axiale, comme sur la figure 1, d'un détendeur suivant l'invention avec un réglage de la pression basse par un élément ressort de détente appuyant également sur la même tête de la pièce mobile, mais dont la surface de contact est plus large que celle correspondant à la chambre de détente aval et démultiplie alors la sensibilité de réglage, ce qui permet un meilleur contrôle de la valeur de pression basse voulue quel que soit la valeur de la haute pression d'entrée.

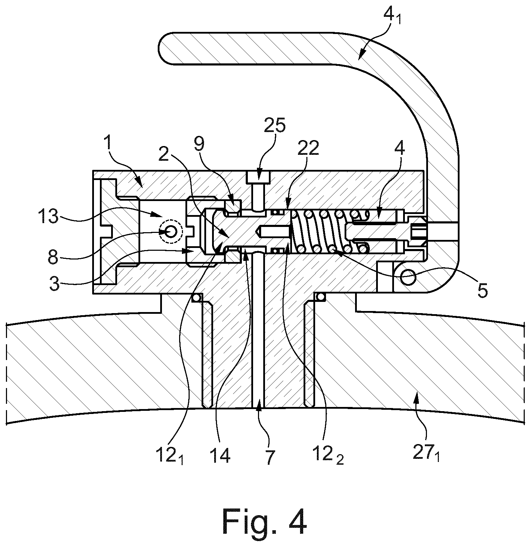

La figure 4 est une vue en coupe axiale, comme sur les figures précédentes, d'une tête de réservoir contenant un fluide à haute pression, laquelle tête incorporant un détendeur du type de celui représenté sur la figure 1 avec une sortie du fluide sous pression à pression basse située bien sûr à l'extérieur du réservoir et un dispositif d'arrêt d'urgence.

Le détendeur suivant l'invention comprend suivant l'enseignement du document GB536796 un corps creux 1 cylindrique sensiblement tubulaire d'axe XX' et réalisé, en matériau compatible et étanche aux fluides sous pression, en plusieurs parties dont les principales sont de même axe XX', emboitables et vissables entre elles : ce brevet GB536796 déposé en 1940 décrit ainsi des caractéristiques communes avec la présente invention, sauf certaines caractéristiques d'une part propres à celle-ci et qui apparaîtront dans la description ci-après, et d'autre part et en particulier une pièce (dite « exhaust valve ») ayant pour fonction et objectif de permettre au gaz de s'échapper du détendeur en cas de surpression et qui n'est pas présente dans la présente invention, alors que celle-ci doit permettre entre autres un meilleur contrôle de la valeur de pression basse voulue quel que soit la valeur de la haute pression d'entrée, ce que n'enseigne pas cet art antérieur.

Le détendeur comporte:
- une arrivée 17 d'un fluide sous pression haute, au moins une sortie 18 de ce fluide sous pression basse depuis une chambre de détente aval 13,
- une pièce mobile de régulation 23 qui coulisse dans un alésage cylindrique du dit corps creux 1 et forme un piston: cette pièce mobile 23 est soumise selon l'axe de cet alésage d'un côté et dans un sens à la pression basse et de l'autre côté et dans un sens opposé à la force d'un élément ressort dit de détente 5,20,
- une pièce 2 de forme générale cylindrique, de préférence de révolution, à deux têtes 12 reliées et séparées par une partie cylindrique de plus petite section dite tige, dont les projections suivant l'axe XX' des deux faces partielles intérieures et opposées 28₁,28₂ sont de surface quasi égale ; ces deux dites faces partielles intérieures 28₁,28₂, une partie d'un alésage 22 entourant la dite pièce 2 d'une manière étanche et un joint d'étanchéité 9 solidaire de cet alésage 22
   délimitent une chambre 14 haute pression correspondant en fait au volume libre laissé par la tige de la pièce 2 à deux têtes; celle-ci et cet alésage 22 étant mobiles l'un par rapport à l'autre,

L'arrivée 17 du fluide haute pression débouche latéralement par un ou plusieurs orifices 7 dans cette chambre 14 haute pression, lequel fluide transmet à la pièce mobile de régulation 23 des efforts soit radiaux soit suivant l'axe XX' mais qui s'annulent du fait qu'ils s'exercent sur des surfaces égales et opposées des faces 28₁,28₂, et le déplacement de la dite pièce mobile de régulation 23 n'est alors pas modifié par les variations de la haute pression,

La pièce mobile 23 arrête l'arrivée 17 du fluide haute pression dans la chambre de détente 13 quand la pression dite basse dans cette chambre 13, en augmentant du fait de cette arrivée de fluide sous haute pression, compense, avec l'aide complémentaire d'un ressort éventuel de rappel 6, la force d'appui opposée de l'élément ressort 5,20 : l'augmentation de la pression basse repousse ainsi la pièce mobile de régulation 23 jusqu'à arrêter l'arrivée du fluide à haute pression et isoler d'une manière étanche la chambre 14 haute pression de la chambre de détente aval 13.

Cet arrêt et cette étanchéité sont obtenus par appui sur le joint étanche 9 de la tête 12₁ située du côté de la pression basse de la chambre de détente aval 13 lorsque la pression dans celle-ci transmet une force supérieure à la force antagoniste fournie par l'élément ressort 5,20 sur la pièce mobile 23 de régulation ; et réciproquement celle-ci ouvre l'arrivée du fluide haute pression de la chambre 14 haute pression vers la chambre de détente 13 lorsque la basse pression dans celle-ci diminuant, du fait du fluide sous pression s'échappant de cette chambre de détente 13 par la sortie 18, transmet une force inférieure à la force antagoniste fournie par l'élément ressort 5,20 sur la pièce mobile 23 de régulation : lequel élément ressort 5,20 déplace à nouveau mais en sens inverse cette pièce mobile 23 et permet cette ouverture, et ainsi de suite.

Selon les modes de réalisation des figures 1, 2 et 4 la pièce 2 de forme générale cylindrique à deux têtes 12 est également la dite pièce mobile de régulation 23₁ sur les faces extérieures desquelles appuient respectivement sur l'une l'élément ressort de détente 5,20 et sur l'autre le fluide à pression basse, et cette pièce 2,23₁ coulisse dans l'alésage 22 solidaire du corps creux 1.

Cette pièce mobile 2,23₁, de forme générale cylindrique à deux têtes 12 reliées par une tige, est un piston dont chaque tête forme une extrémité et sur les faces extérieures desquelles appuient respectivement, directement ou indirectement :
- pour la première 12₂,26 , l'élément ressort de détente, qui peut être un ressort à spirale 5, ou un fluide sous pression à une pression de référence située dans une chambre étanche 20, ou même à la fois un ressort et un fluide sous pression, et
- pour la deuxième 12₁ le fluide sous pression à pression basse, et éventuellement un ressort de rappel 6.

La première tête 12₂ de la pièce mobile 2 coulisse, comme un piston de moteur dans sa chemise, dans l'alésage 22 d'une manière étanche grâce à un joint torique d'étanchéité 10₁ périphérique et une bague anti-extrusion 15 ; la deuxième tête 12₁ coulisse d'une manière non étanche dans la chambre de détente aval 13, qui est en fait le prolongement de l'alésage 22 d'un diamètre qui est de préférence légèrement plus grand.

Les diamètres extérieurs de ces deux têtes 12 sont égaux et le bord périphérique intérieur 21 de la deuxième tête 12₁, c'est-à-dire situé face à la première tête 12₂ dans le sens de l'axe XX', vient en appui étanche contre le joint 9 plat et épais, ou torique : ce joint 9, disposé entre les chambres basse pression 13 et haute pression 14, est maintenu en place entre un épaulement réalisé à l'extrémité de l'alésage 22 et l'extrémité d'une pièce dite inférieure 3.

Cette pièce inférieure 3 est vissée, et bloquée à la position voulue par une aiguille latérale 11, dans un alésage réalisé suivant un diamètre supérieur à celui 22, dans lequel coulisse la pièce mobile 2 et suivant le même axe XX'. Cette pièce inférieure 3 est creuse avec une partie, de diamètre supérieur à celui de la tête 12₁, constituant la chambre de détente 13 et contenant le ressort de rappel 6, et une autre partie, ouverte suivant le mode de représentation des figures 1 et 2, vers l'extérieur, constituant l'orifice de sortie 18 basse pression, alors que sa partie extérieure entourant cette sortie 18 constitue un embout de connexion 18₁.

Cette sortie 8 basse pression est représentée sur les figures 1 et 2 dans l'axe XX' du détendeur et orientée vers le bas suivant le sens donné par ces figures (mais qui pourrait être le haut si celles-ci avaient été représentées dans l'autre sens) mais la partie ouverte de cette pièce inférieure 3, et/ou du corps creux lui-même 1, peut être fermée comme sur la figure 4 et la sortie basse pression 8 située latéralement par exemple à travers la paroi du corps 1 creux du détendeur grâce à tout conduit de communication qui relie pour cela la chambre de détente 13 basse pression et l'orifice de sortie.

Le joint 9 est d'un diamètre extérieur supérieur à celui de la tête 12₁ et d'un diamètre intérieur inférieur à celle-ci mais supérieur à celui de la partie médiane de section plus étroite ou tige du piston 2, qui relie les deux dites têtes et délimite une partie de la chambre haute pression 14.

Le bord périphérique intérieur 21 de la deuxième tête 12₁ peut être légèrement recourbé vers l'intérieur pour assurer l'étanchéité à son extrémité contre le joint 9 et mieux délimiter dans cette position une surface de la face partielle intérieure de cette deuxième tête 12₁, égale à celle opposée correspondant à la face partielle intérieure de la première tête 12₂ délimitée entre la paroi de l'alésage 22 et la tige du piston 2.

Suivant la figure 2, l'extrémité de la pièce mobile de régulation 23₁ ou pièce 2 à deux têtes, qui reçoit en appui l'élément ressort 5,20, forme une tête 26 de plus grande section que celles des têtes 12 délimitant la chambre haute pression 14 : un conduit de communication 24 relie une première chambre aval de détente 13₁, , qui reçoit le fluide en provenance de l'arrivée 17 haute pression quand la pièce mobile de régulation 2 à deux têtes 12 ouvre celle-ci, et une deuxième chambre de détente 13₂ située de l'autre côté de la tête 26 de grande section de l'élément mobile 23.

Cette grande section de surface de la tête 26 démultiplie alors la sensibilité de réglage, ce qui permet un meilleur contrôle de la valeur de pression basse voulue quel que soit la valeur de la haute pression d'entrée.

Dans le mode de réalisation suivant la figure 3, la disposition des éléments actifs est inversé : la pièce 2 de forme générale cylindrique à deux têtes 12 est fixe par rapport au corps creux 1 et la pièce mobile de régulation 23₂ porte l'alésage 22 et le joint 9 qui coulissent autour de la pièce 2 de forme générale cylindrique à deux têtes 12 ; et cette pièce mobile de régulation 23₂ coulisse elle-même dans un autre alésage 29 du corps creux 1.

Dans cette configuration même si la pièce 2 est fixe, du fait de sa forme cylindrique dans laquelle arrive la haute pression et celle de l'alésage 22 qui coulisse autour d'elle d'une manière étanche, les effets de la haute pression ne s'exerce que perpendiculairement au déplacement de la pièce mobile 23₂ de régulation ; et même si l'alésage 22 comporte des surfaces non cylindriques comme celles du joint 9, il s'agit de surfaces opposées et égales, comme celles intérieures 28 des têtes 12 , et dont les forces qui leur sont transmises par le fluide sous haute pression s'annulent donc.

Le principe de fonctionnement est le même que dans les autres modes de réalisation des figures 1 et 2, avec certes des différences au niveau de l'arrivée du fluide à haute pression qui arrive 7,17 par l'intérieur de la pièce fixe à deux têtes 2 et débouche dans la chambre 14 entre les deux têtes 12 et c'est la pièce 3, qui maintient le joint 9, qui assure l'étanchéité autour de la tête 12₂ et ne communique pas avec la chambre de détente 13. Cette chambre de détente 13 entoure ici la partie inférieure de la pièce de régulation 23₂ et comme dans la figure 2 sa tête qui reçoit en appui l'élément ressort 5,20 est de plus grande section que celles des têtes 12 de la pièce 2 délimitant la chambre haute pression, ce qui démultiplie ici ausi la sensibilité de réglage et permet un meilleur contrôle de la valeur de pression basse voulue quel que soit la valeur de la haute pression d'entrée.

Dans tous les modes de réalisation décrits ci-dessus, le détendeur comporte un dispositif de réglage 4 de la poussée de l'élément ressort dit de détente 5,20 , lequel dispositif de réglage 4 est coaxial au mouvement de la pièce mobile de régulation 23₁,23₂ et son réglage détermine la force maximum de compression de l'élément ressort dit de détente 5,20 en position d'arrêt- de l'arrivée 7 du fluide à pression haute et donc la valeur de la pression basse.

Suivant la représentation des figures 1 et 2, le dispositif de réglage 4 est un boulon vissé dans l'axe du corps creux 1 à l'intérieur d'un alésage 20₁ recevant un ressort mécanique dit de détente 5 et percé dans le prolongement de celui 22,29 dans lequel coulisse la pièce mobile de régulation 23₁,23₂ .

Quelque soit le mode de réalisation, et en particulier suivant la figure 3, l'élément ressort dit de détente 5,20 et le dispositif de réglage 4 sont constitués par une chambre 20 percée dans le prolongement de l'alésage 22,29 où coulisse la pièce mobile de régulation 23₁,23₂ et dans laquelle un fluide, à pression de référence donnée et réglable, maintient une poussée d'appui sur la surface de la tête 12₂,26,30 de la pièce mobile de régulation 23₁,23₂ opposée à celle sur laquelle appuie la pression basse voulue.

La figure 4 représente une tête de réservoir 27 de stockage d'un fluide sous haute pression : cette tête comporte un détendeur suivant les caractéristiques décrites précédemment et plus particulièrement suivant le mode de réalisation de la figure 1 ; lequel détendeur est intégré dans la dite tête dont le corps 1, correspondant à celui 1 du détendeur, est apte à être fixé sur le col de la paroi 27₁ réservoir 27.

L'axe XX' du détendeur est de direction tangente à la paroi 27₁ du réservoir et l'orifice d'arrivée 7 du fluide à pression haute étant alors située à l'intérieur du réservoir 27 et celui de sortie 8 à l'extérieur de celui-ci.

Le détendeur ou la tête de réservoir comporte également un conduit 25 de remplissage, qui traverse le corps 1 et qui débouche dans la chambre 14 haute pression : il est ainsi apte à permettre le remplissage du réservoir 27 avec le dit fluide sous pression haute sans nécessité d'autre passage de coque dans la tête de réservoir ou le réservoir lui-même.

Dans un mode de réalisation non représenté ici, l'axe XX' du détendeur est dans l'axe du col du réservoir, un conduit haute pression relie alors la chambre haute pression 14, à la fois à l'intérieur du réservoir et à l'extérieur pour le remplissage, et un autre conduit basse pression relie la chambre basse pression 13 à l'extérieur.

Le détendeur ou la tête de réservoir comporte un dispositif d'arrêt d'urgence 4₁ de la sortie basse pression du fluide ; ce dispositif 4 est apte à libérer la force de compression de l'élément ressort 5,20 dit de détente, tel qu'une poignée 4₁, articulée à son extrémité proximale sur le corps 1 du détendeur ou tête de réservoir, et qui en tirant manuellement sur son extrémité libre distale et recourbée déplace le dispositif de réglage 4 qui maintient l'élément ressort 5 : celui-ci n'appuie plus alors sur la pièce 2 de régulation qui reste ainsi en position de fermeture et la sortie basse pression n'est plus alimentée.

## Revendications

1. Détendeur compensé de fluide sous pression comportant :
- un corps creux (1) d'axe xx', au moins une arrivée (17) du dit fluide sous pression dite haute, au moins une sortie (18) de ce fluide sous pression dite basse depuis une chambre de détente aval (13), une pièce mobile de régulation (23) qui coulisse dans un alésage cylindrique du dit corps creux (1), et qui, formant un piston sur lequel appuient d'un côté la pression basse et de l'autre côté un élément ressort dit de détente (5,20), est apte à arrêter l'arrivée du fluide à pression haute,
- une pièce (2) de forme générale cylindrique à deux têtes (12) reliées et séparées par une partie cylindrique de plus petite section, et dont les deux projections suivant l'axe xx' des deux faces partielles intérieures et opposées (28₁,28₂) sont de surface quasi égale, ces deux dites faces partielles intérieures (28₁,28₂), une partie d'un alésage (22) entourant la dite pièce (2) d'une manière étanche et un appui d'étanchéité (9) solidaire de cet alésage (22) délimitant une chambre (14) haute pression, ladite pièce (2) à deux têtes et cet alésage (22) étant mobiles l'un par rapport à l'autre, tel que :
- l'arrivée (17) du fluide haute pression débouche latéralement dans cette chambre (14) haute pression, lequel fluide transmet à la pièce mobile de régulation (23) des efforts qui s'annulent, et le déplacement de la dite pièce mobile de régulation (23) n'est alors pas modifié par les variations de la haute pression,
- la pièce mobile de régulation (23) vient arrêter l'arrivée (17) du fluide haute pression et isoler d'une manière étanche la chambre (14) haute pression de la chambre de détente aval (13) par appui sur l'appui d'étanchéité (9) de la tête (12₁) située du côté de la pression basse de la chambre de détente aval (13) lorsque la pression dans celle-ci transmet une force supérieure à la force antagoniste fournie par l'élément ressort (5,20) sur la pièce mobile (23) de régulation,
- et réciproquement celle-ci ouvre l'arrivée du fluide haute pression de la chambre (14) haute pression vers la chambre de détente (13) lorsque la basse pression dans celle-ci transmet une force inférieure à la force antagoniste fournie par l'élément ressort (5,20) sur la pièce mobile (23) de régulation,
**caractérisé en ce que** :
- l'appui d'étanchéité (9) est un joint
- la pièce (2) de forme générale cylindrique à deux têtes (12) est fixe par rapport au corps creux (1) et la pièce mobile de régulation (23₂) porte l'alésage (22) et le joint (9) qui coulissent autour de la pièce (2) de forme générale cylindrique à deux têtes (12), cette pièce mobile de régulation (23₂) coulissant elle-même dans un autre alésage (29) du corps creux (1).

2. Détendeur compensé de fluide sous pression comportant :
- un corps creux (1) d'axe xx', au moins une arrivée (17) du dit fluide sous pression dite haute, au moins une sortie (18) de ce fluide sous pression dite basse depuis une chambre de détente aval (13), une pièce mobile de régulation (23) qui coulisse dans un alésage cylindrique du dit corps creux (1), et qui, formant un piston sur lequel appuient d'un côté la pression basse et de l'autre côté un élément ressort dit de détente (5,20), est apte à arrêter l'arrivée du fluide à pression haute,
- une pièce (2) de forme générale cylindrique à deux têtes (12) reliée et séparée par une partie cylindrique de plus petite section, et dont les deux projections suivant l'axe xx' des deux faces partielles intérieures et opposées (28₁,28₂) sont de surface quasi égale, ces deux dites faces partielles intérieures (28₁,28₂), une partie d'un alésage (22) entourant la dite pièce (2) d'une manière étanche et un appui d'étanchéité (9) solidaire de cet alésage (22) délimitant une chambre (14) haute pression, ladite pièce (2) à deux têtes et cet alésage (22) étant mobiles l'un par rapport à l'autre, tel que :
- l'arrivée (17) du fluide haute pression débouche latéralement dans cette chambre (14) haute pression, lequel fluide transmet à la pièce mobile de régulation (23) des efforts qui s'annulent, et le déplacement de la dite pièce mobile de régulation (23) n'est alors pas modifié par les variations de la haute pression,
- la pièce mobile de régulation (23) vient arrêter l'arrivée (17) du fluide haute pression et isoler d'une manière étanche la chambre (14) haute pression de la chambre de détente aval (13) par appui sur l'appui d'étanchéité (9) de la tête (12₁) située du côté de la pression basse de la chambre de détente aval (13) lorsque la pression dans celle-ci transmet une force supérieure à la force antagoniste fournie par l'élément ressort (5,20) sur la pièce mobile (23) de régulation,
- et réciproquement celle-ci ouvre l'arrivée du fluide haute pression de la chambre (14) haute pression vers la chambre de détente (13) lorsque la basse pression dans celle-ci transmet une force inférieure à la force antagoniste fournie par l'élément ressort (5,20) sur la pièce mobile (23) de régulation,
- la pièce (2) de forme générale cylindrique à deux têtes (12) est la dite pièce mobile de régulation (23₁) sur les faces extérieures desquelles appuient respectivement sur l'une l'élément ressort de détente (5,20) et sur l'autre le fluide à pression basse, et cette pièce (2,23₁) coulisse dans l'alésage (22) solidaire du corps creux (1),
- un conduit de communication (24) entre une première chambre aval de détente (13₁), qui reçoit le fluide en provenance de l'arrivée (17) haute pression quand la pièce mobile de régulation (2) à deux têtes (12) ouvre celle-ci, et une deuxième chambre de détente (13₂) située de l'autre côté de l'élément mobile (23),
**caractérisé en ce que**:
- l'appui d'étanchéité (9) est un joint
- l'extrémité de la pièce mobile de régulation (23₁) ou pièce (2) à deux têtes, qui reçoit en appui l'élément ressort (5,20), forme une tête (26) de plus grande section que celles des têtes (12) délimitant la chambre haute pression (14), et qui démultiplie la sensibilité de réglage, apte à permettre un meilleur contrôle de la valeur de pression basse voulue quel que soit la valeur de la haute pression d'entrée,
- la deuxième chambre de détente (13₂) est située de l'autre côté de la tête (26) de grande section de l'élément mobile (23).

3. Détendeur compensé de fluide haute pression suivant l'une quelconque des revendications 1 et 2 **caractérisé en ce qu'**il comporte un dispositif de réglage (4) de la poussée de l'élément ressort dit de détente (5,20), lequel dispositif de réglage (4) est coaxial au mouvement de la pièce mobile de régulation (23₁,23₂) et son réglage détermine la force maximum de compression de l'élément ressort dit de détente (5,20) en position d'arrêt de l'arrivée (7) du fluide à pression haute et donc la valeur de la pression basse.

4. Détendeur compensé de fluide sous pression suivant la revendication 3 **caractérisé en ce que** le dispositif de réglage (4) est un boulon vissé dans l'axe du corps creux (1) à l'intérieur d'un alésage (20₁) recevant un ressort mécanique dit de détente (5) et percé dans le prolongement de celui (22,29) dans lequel coulisse la pièce mobile de régulation (23₁,23₂).

5. Détendeur compensé de fluide sous pression suivant la revendication 3 **caractérisé en ce que** l'élément ressort dit de détente (5,20) et le dispositif de réglage (4) sont constitués par une chambre (20) percée dans le prolongement de l'alésage (22,29) où coulisse la pièce mobile de régulation (23₁,23₂) et dans laquelle un fluide, à pression de référence donnée et réglable, maintient une poussée d'appui sur la surface de la tête (12₂,26,30) de la pièce mobile de régulation (23₁,23₂) opposée à celle sur laquelle appuie la pression basse voulue.

6. Tête de réservoir **caractérisée en ce qu'**elle comporte un détendeur suivant l'une quelconque des revendications 1 à 5, lequel détendeur est intégré dans la dite tête dont le corps (1), correspondant à celui (1) du détendeur, est apte à être fixé sur le col d'un réservoir (27) de stockage d'un fluide sous pression, l'orifice d'arrivée (7) du fluide à pression haute étant alors située à l'intérieur du réservoir (27) et celui de sortie (8) à l'extérieur de celui-ci.

7. Tête de réservoir suivant la revendication 6 **caractérisée en ce qu'**elle comporte un conduit (25) de remplissage, qui traverse le corps (1) et qui est apte à permettre le remplissage du réservoir (27) avec le dit fluide sous pression haute.

8. Tête de réservoir suivant l'une quelconque des revendications 6 et 7 **caractérisée en ce qu'**elle comporte un dispositif d'arrêt d'urgence (41) apte à libérer la force de compression de l'élément ressort (5,20) dit de détente.

## Patentansprüche

1. Kompensiertes Expansionsventil für Druckfluid, umfassend:
- einen Hohlkörper (1) mit einer Achse xx', mindestens einen Einlass (17) für das Fluid unter sog. Hochdruck, mindestens einen Auslass (18) für dieses Fluid unter sog. Niederdruck aus einer stromabwärtigen Expansionskammer (13), ein bewegliches Regulierstück (23), das in einer zylinderförmigen Bohrung des Hohlkörpers (1) gleitet und das, indem es einen Kolben bildet, auf dem auf einer Seite der Niederdruck und auf der anderen Seite ein sog. Expansions-Federelement (5, 20) anliegen, den Einlass des Hochdruckfluids sperren kann,
- ein Stück (2) von allgemein zylinderförmiger Form mit zwei Köpfen (12), die durch einen zylinderförmigen Teil von kleinerem Querschnitt verbunden und getrennt sind, und deren zwei Vorsprünge entlang der Achse xx' der zwei innen- und gegenüberliegenden Teilflächen (28₁, 28₂) von nahezu gleicher Fläche sind, wobei diese zwei innenliegenden Teilflächen (28₁, 28₂), ein Teil einer Bohrung (22), der das Stück (2) dicht umgibt, und eine fest mit dieser Bohrung (22) verbundene Dichtungsauflage (9) eine Hochdruckkammer (14) begrenzen, wobei das zweiköpfige Stück (2) und diese Bohrung (22) zueinander beweglich sind, derart, dass:
- der Einlass (17) des Hochdruckfluids seitlich in dieser Hochdruckkammer (14) mündet, wobei das Fluid Kräfte auf das bewegliche Regulierstück (23) überträgt, die sich aufheben, und die Verlagerung des beweglichen Regulierstücks (23) dann nicht von den Schwankungen des Hochdrucks verändert wird,
- das bewegliche Regulierstück (23) durch Auflage auf der Dichtungsauflage (9) des Kopfes (12₁), der auf der Niederdruckseite der stromabwärtigen Expansionskammer (13) liegt, den Einlass (17) des Hochdruckfluids sperrt und die Hochdruckkammer (14) dicht von der stromabwärtigen Expansionskammer (13) isoliert, wenn der Druck in dieser eine Kraft überträgt, die größer ist als die vom Federelement (5, 20) bereitgestellte Gegenkraft auf dem beweglichen Regulierstück (23),
- und dieses umgekehrt den Einlass des Hochdruckfluids aus der Hochdruckkammer (14) in die Expansionskammer (13) öffnet, wenn der Niederdruck in dieser eine Kraft überträgt, die kleiner ist als die vom Federelement (5, 20) bereitgestellte Gegenkraft auf dem beweglichen Regulierstück (23),
**dadurch gekennzeichnet, dass**:
- es sich bei der Dichtungsauflage (9) um eine Dichtung handelt,
- das Stück (2) von allgemein zylinderförmiger Form mit zwei Köpfen (12) in Bezug auf den Hohlkörper (1) fest ist und das bewegliche Regulierstück (23₂) die Bohrung (22) und die Dichtung (9) trägt, die um das Stück (2) von allgemein zylinderförmiger Form mit zwei Köpfen (12) gleiten, wobei dieses bewegliche Regulierstück (23₂) seinerseits in einer weiteren Bohrung (29) des Hohlkörpers (1) gleitet.

2. Kompensiertes Expansionsventil für Druckfluid, umfassend:
- einen Hohlkörper (1) mit einer Achse xx', mindestens einen Einlass (17) für das Fluid unter sog. Hochdruck, mindestens einen Auslass (18) für dieses Fluid unter sog. Niederdruck aus einer stromabwärtigen Expansionskammer (13), ein bewegliches Regulierstück (23), das in einer zylinderförmigen Bohrung des Hohlkörpers (1) gleitet und das, indem es einen Kolben bildet, auf dem auf einer Seite der Niederdruck und auf der anderen Seite ein sog. Expansions-Federelement (5, 20) anliegen, den Einlass des Hochdruckfluids sperren kann,
- ein Stück (2) von allgemein zylinderförmiger Form mit zwei Köpfen (12), die durch einen zylinderförmigen Teil von kleinerem Querschnitt verbunden und getrennt sind, und deren zwei Vorsprünge entlang der Achse xx' der zwei innen- und gegenüberliegenden Teilflächen (28₁, 28₂) von nahezu gleicher Fläche sind, wobei diese zwei innenliegenden Teilflächen (28₁, 28₂), ein Teil einer Bohrung (22), der das Stück (2) dicht umgibt, und eine fest mit dieser Bohrung (22) verbundene Dichtungsauflage (9) eine Hochdruckkammer (14) begrenzen, wobei das zweiköpfige Stück (2) und diese Bohrung (22) zueinander beweglich sind, derart, dass:
- der Einlass (17) des Hochdruckfluids seitlich in dieser Hochdruckkammer (14) mündet, wobei das Fluid Kräfte auf das bewegliche Regulierstück (23) überträgt, die sich aufheben, und die Verlagerung des beweglichen Regulierstücks (23) dann nicht von den Schwankungen des Hochdrucks verändert wird,
- das bewegliche Regulierstück (23) durch Auflage auf der Dichtungsauflage (9) des Kopfes (12₁), der auf der Niederdruckseite der stromabwärtigen Expansionskammer (13) liegt, den Einlass (17) des Hochdruckfluids sperrt und die Hochdruckkammer (14) dicht von der stromabwärtigen Expansionskammer (13) isoliert, wenn der Druck in dieser eine Kraft überträgt, die größer ist als die vom Federelement (5, 20) bereitgestellte Gegenkraft auf dem beweglichen Regulierstück (23),
- und dieses umgekehrt den Einlass des Hochdruckfluids aus der Hochdruckkammer (14) in die Expansionskammer (13) öffnet, wenn der Niederdruck in dieser eine Kraft überträgt, die kleiner ist als die vom Federelement (5, 20) bereitgestellte Gegenkraft auf dem beweglichen Regulierstück (23),
- das Stück (2) von allgemein zylinderförmiger Form mit zwei Köpfen (12) das bewegliche Regulierstück (23₁) ist, auf dessen Außenflächen jeweils einerseits das Expansions-Federelement (5, 20), und andererseits das Niederdruckfluid anliegen, und dieses Stück (2, 23₁) in der fest mit dem Hohlkörper (1) verbundenen Bohrung (22) gleitet,
- einen Kommunikationskanal (24) zwischen einer ersten stromabwärtigen Expansionskammer (13₁), die das aus dem Hochdruckeinlass (17) kommende Fluid aufnimmt, wenn das bewegliche Regulierstück (2) mit zwei Köpfen (12) diesen öffnet, und einer zweiten Expansionskammer (13₂), die auf der anderen Seite des beweglichen Elements (23) liegt,
**dadurch gekennzeichnet, dass**:
- es sich bei der Dichtungsauflage (9) um eine Dichtung handelt,
- das Ende des beweglichen Regulierstücks (23₁) oder zweiköpfigen Stücks (2), das das Federelement (5, 20) in Anlage aufnimmt, einen Kopf (26) von größerem Querschnitt als jenen der Köpfe (12) bildet, die die Hochdruckkammer (14) begrenzen, und das die Einstellempfindlichkeit untersetzt, eine bessere Steuerung des gewünschten Niederdruckwerts unabhängig vom Eingangs-Hochdruckwert ermöglichen kann,
- die zweite Expansionskammer (13₂) auf der anderen Seite des Kopfes (26) mit großem Querschnitt des beweglichen Elements (23) liegt.

3. Kompensiertes Expansionsventil für Hochdruckfluid nach einem der Ansprüche 1 und 2, **dadurch gekennzeichnet, dass** es eine Vorrichtung zum Einstellen (4) der Druckkraft des sog. Expansions-Federelements (5, 20) umfasst, wobei die Einstellvorrichtung (4) mit der Bewegung des beweglichen Regulierstücks (23₁, 23₂) koaxial ist und seine Einstellung die maximale Kompressionskraft des sog. Expansions-Federelements (5, 20) in Sperrstellung des Einlasses (7) für das Hochdruckfluid und damit den Wert des Niederdrucks bestimmt.

4. Kompensiertes Expansionsventil für Druckfluid nach Anspruch 3, **dadurch gekennzeichnet, dass** es sich bei der Einstellvorrichtung (4) um einen Schraubbolzen in der Achse des Hohlkörpers (1) im Inneren einer Bohrung (20₁) handelt, die eine sog. mechanische Expansionsfeder (5) aufnimmt und in der Verlängerung derselben (22, 29) gebohrt ist, in der das bewegliche Regulierstück (23₁, 23₂) gleitet.

5. Kompensiertes Expansionsventil für Druckfluid nach Anspruch 3, **dadurch gekennzeichnet, dass** das sog. Expansions-Federelement (5, 20) und die Einstellvorrichtung (4) aus einer Kammer (20) bestehen, die in der Verlängerung der Bohrung (22, 29) gebohrt ist, in der das bewegliche Regulierstück (23₁, 23₂) gleitet und in der ein Fluid mit gegebenem und einstellbarem Referenzdruck eine Andruckkraft auf der Fläche des Kopfes (12₂, 26, 30) des beweglichen Regulierstücks (23₁, 23₂) hält, der demjenigen, an dem der gewünschte Niederdruck anliegt, gegenüberliegt.

6. Behälterkopf, **dadurch gekennzeichnet, dass** er ein Expansionsventil nach einem der Ansprüche 1 bis 5 umfasst, wobei das Expansionsventil in den Kopf integriert ist, dessen Körper (1), der demjenigen (1) des Expansionsventils entspricht, auf dem Hals eines Behälters (27) zur Lagerung eines Druckfluids befestigt werden kann, wobei sich die Öffnung für den Einlass (7) des Hochdruckfluids dann auf der Innenseite des Behälters (27), und jene für den Auslass (8) auf der Außenseite desselben befindet.

7. Behälterkopf nach Anspruch 6, **dadurch gekennzeichnet, dass** er einen Kanal (25) zum Befüllen umfasst, der durch den Körper (1) hindurchgeht und der das Befüllen des Behälters (27) mit dem Hochdruckfluid ermöglichen kann.

8. Behälterkopf nach einem der Ansprüche 6 und 7, **dadurch gekennzeichnet, dass** er eine Notabschaltvorrichtung (41) umfasst, die die Kompressionskraft des sog. Expansions-Federelements (5, 20) freigeben kann.

## Claims

1. Compensated pressure regulator for use with fluid under pressure comprising:
- a hollow body (1) with axis xx', at least one intake (17) for said fluid under high pressure, at least one outlet (18) for this fluid under low pressure from a downstream expansion chamber (13), a mobile regulation part (23) which slides in a cylindrical bore of said hollow body (1), and which, forming a piston on which bear on one side the low pressure and on the other side an expansion spring element (5, 20), is able to stop the intake of the fluid at high pressure;
- a part (2) with a generally cylindrical form with two heads (12) connected and separated by a cylindrical portion with a smaller cross-section, and of which the two projections along the axis xx' of the two partial inner and opposing faces (28₁, 28₂) are almost of equal surface area, and these two partial inner faces (28₁, 28₂), a portion of a bore (22) surrounding said part (2) in a seal tight manner and a sealing support (9) integral with this bore (22) delimiting a high-pressure chamber (14), said part (2) with two heads and this bore (22) being movable in relation to one another, such that:
- the intake (17) of the high-pressure fluid emerges laterally into this high-pressure chamber (14), which fluid transmits to the mobile regulation part (23) loads which cancel each other, and the movement of said mobile regulation part (23) is therefore not modified by variations of the high pressure,
- the mobile regulation part (23) stops the intake (17) of the high-pressure fluid and isolates, in a seal tight manner, the high-pressure chamber (14) from the downstream expansion chamber (13) by bearing on the sealing support (9) of the head (12₁) located on the low-pressure side of the downstream expansion chamber (13) when the pressure therein transmits a force greater than the opposing force provided by the spring element (5, 20) on the mobile regulation part (23),
- and reciprocally this mobile regulation part (23) opens the intake for the high-pressure fluid from the high-pressure chamber (14) to the expansion chamber (13) when the low pressure therein transmits a force lower than the opposing force provided by the spring element (5, 20) on the mobile regulation part (23),
**characterised in that**:
- the sealing support (9) is a seal,
- the part (2) with a generally cylindrical shape with two heads (12) is fixed in relation of the hollow body (1) and the mobile regulation part (23₂) bears the bore (22) and the seal (9) which slide around the part (2) with a generally cylindrical shape with two heads (12), said mobile regulation part (23₂) sliding itself into another bore (29) of the hollow body (1).

2. Compensated pressure regulator for use with fluid under pressure comprising:
- a hollow body (1) with axis xx', at least one intake (17) for said fluid under high pressure, at least one outlet (18) for this fluid under low pressure from a downstream expansion chamber (13), a mobile regulation part (23) which slides in a cylindrical bore of said hollow body (1), and which, forming a piston on which bear on one side the low pressure and on the other side an expansion spring element (5, 20), is able to stop the intake of the fluid at high pressure;
- a part (2) with a generally cylindrical form with two heads (12) connected and separated by a cylindrical portion with a smaller cross-section, and of which the two projections along the axis xx' of the two partial inner and opposing faces (28₁, 28₂) are of almost equal surface area, and these two partial inner faces (28₁, 28₂), a portion of a bore (22) surrounding said part (2) in a seal tight manner and a sealing support (9) integral with this bore (22) delimiting a high-pressure chamber (14), said part (2) with two heads and this bore (22) being movable in relation to one another, such that:
- the intake (17) of the high-pressure fluid emerges laterally into this high-pressure chamber (14), which fluid transmits to the mobile regulation part (23) loads which cancel each other, and the movement of said mobile regulation part (23) is therefore not modified by variations of the high pressure,
- the mobile regulation part (23) stops the intake (17) of the high-pressure fluid and isolates, in a seal tight manner, the high-pressure chamber (14) from the downstream expansion chamber (13) by bearing on the sealing support (9) of the head (12₁) located on the low-pressure side of the downstream expansion chamber (13) when the pressure therein transmits a force greater than the opposing force provided by the spring element (5, 20) on the mobile regulation part (23),
- and reciprocally this mobile regulation part (23) opens the intake for the high-pressure fluid from the high-pressure chamber (14) to the expansion chamber (13) when the low pressure therein transmits a force lower than the opposing force provided by the spring element (5, 20) on the mobile regulation part (23),
- the generally cylindrically shaped part (2) with two heads (12) is said mobile regulation part (23₁) on the exterior faces of which bear on the one side an expansion spring element (5, 20) and on the other side the low pressure, and this part (2, 23₁) slides in the bore (22) integral with the hollow body (1),
- a communication duct (24) between a first downstream expansion chamber (13₁), which receives the fluid coming from the high pressure intake (17) when the mobile regulation part (2) with two heads (12) opens the latter and a second expansion chamber (13₂) located on the other side of the mobile element (23),
**characterised in that**:
- the sealing support (9) is a seal,
- the end of the mobile regulation part (23₁) or part (2) with two heads, which receives in support the spring element (5, 20), forms a head (26) of larger cross-section than those of heads (12) delimiting the high-pressure chamber (14), and which multiplies the sensitivity of adjustment, capable of allowing better control of the desired low pressure value regardless of the value of the high intake pressure,
- the second expansion chamber (13₂) is located on the other side of the head (26) of large cross-section of the mobile part (23).

3. Compensated pressure regulator for use with high-pressure fluid according to any of claims 1 and 2 **characterised in that** it comprises a device (4) for adjusting the thrust of the expansion spring element (5, 20), which adjustment device (4) is coaxial to the movement of the mobile regulation part (23₁, 23₂) and its adjustment determines the maximum compression force of the expansion spring element (5, 20) in the position of stoppage of the intake (7) for the high-pressure fluid and therefore the value of the low pressure.

4. Compensated pressure regulator for use with fluid under pressure according to claim 3 **characterised in that** the adjustment device (4) is a bolt screwed into the axis of the hollow body (1) inside a bore (20₁) receiving an expansion spring element (5) and drilled into the extension thereof (22, 29) in which the mobile regulation part (23₁, 23₂) slides.

5. Compensated pressure regulator for use with fluid under pressure according to claim 3 **characterised in that** the expansion spring element (5, 20) and the adjustment device (4) consist of a chamber (20) drilled into the extension of the bore (22, 29) where the mobile regulation part (23₁, 23₂) slides and in which a fluid, at given and adjustable reference pressure, maintains a bearing thrust on the surface of the head (12₂, 26, 30) of the mobile regulation part (23₁, 23₂) opposite that on which the desired low pressure bears.

6. Tank head, **characterised in that** it comprises a pressure regulator according to any of claims 1 to 5, which pressure regulator is integrated into said head, the body (1) of which, corresponding to the body (1) of the pressure regulator, is able to be fixed onto the neck of a tank (27) for storing a fluid under pressure, the intake orifice (7) for the high-pressure fluid being then situated inside the tank (27) and the outlet orifice (8) being situated outside the tank (27).

7. Tank head according to claim 6 **characterised in that** it comprises a filling duct (25), which passes through the body (1) and which is able to allow the filling of the tank (27) with said fluid under high pressure.

8. Tank head according to any of claims 6 and 7, **characterised in that** it comprises an emergency stop device (41) able to release the compression force of the expansion spring element (5, 20).
